# EUROPÄISCHE PATENTSCHRIFT

(11) **EP 0 258 643 B1**
(45) Veröffentlichungstag und Bekanntmachung des Hinweises auf die Patenterteilung: **10.03.1993**
(21) Anmeldenummer: 87111072.2
(22) Anmeldetag: 30.07.1987
(51) Int. Cl.: H04Q 3/545, H04M 11/00, H04M 3/42

(54) **Verfahren für ein mit einem Verarbeitungsrechner verbundenes rechnergesteuertes Vermittlungssytem, insbesondere Fernsprechnebenstellensystem**
Method for a processor-controlled switching system, especially a private telephone exchange system, connected to a processor
Méthode pour un système de commutation, en particulier système de central téléphonique privé commandé par calculateur et connecté avec un calculateur de traitement

(30) Priorität: 29.08.1986 DE 3629405
(43) Veröffentlichungstag der Anmeldung: 09.03.1988
(73) Patentinhaber: SIEMENS AKTIENGESELLSCHAFT, 80333 München (DE)
(72) Erfinder: Fey, Dieter, Dipl.-Ing., D-8000 München 71 (DE)

(56) Entgegenhaltungen:
- EP-A- 0 187 945
- EP-A- 0 262 331
- DE-A- 2 230 446
- TELCOM REPORT, 1985, Sonderheft, Seiten 76-83, Berlin, DE; J. ALBATH: "Integrierte Server des ISDN-Kommunikationssystems HICOM"
- PROCEEDINGS OF THE NATIONAL ELECTRONICS CONFERENCE, Band 28, 8.-10. Oktober 1973, Seiten 234-240; R. GAGNIER: "The SP-1 switching system - centrex services"
- PROCEEDINGS OF THE INTERNATIONAL SWITCHING SYMPOSIUM, Florence, 7.-11. Mai 1984, Teil I, "Session 21B", "Paper 4", Florence, IT; H.-J. BERGS et al.: "Implementation of services in an ISDN"

## Beschreibung

Die Erfindung betrifft ein Verfahren für ein rechnergesteuertes Vermittlungssystem, insbesondere Fernsprechnebenstellensystem, das wahlweise unmittelbar oder mittelbar über eine hierfür eingerichtete Schnittstelle und einen darüber anschaltbaren zentralen Datenkanal mit einem ihm zugeordneten Verarbeitungsrechner zur Aufnahme und/oder Abwicklung von Aufträgen für damit abzurufende unterschiedliche Dienstleistungen verbunden ist, wobei die für die Eingabe der Aufträge an das System verwendeten Eingabeorgane der daran angeschlossenen Endeinrichtungen je nach vorgesehenen Typ sich hinsichtlich ihres Zeichenvorrates und ihrer übertragungstechnischen Darstellung der Zeichenelemente unterscheiden.

In bestimmten Anwendungsbereichen gewinnt die Zusammenarbeit zwischen einem Vermittlungssystem, insbesondere einem Fernsprechnebenstellensystem und einem Verarbeitungsrechner, der beispielsweise durch ein Mikrorechnersystem oder durch eine große Datenverarbeitungsanlage realisiert sein kann, zunehmend an Bedeutung. Ein solcher Steuerverbund bringt für bestimmte Anwendungsfälle in vielen Bereichen, wie z.B. im Hotelgewerbe, der Krankenhausorganisation und im Groß-und Einzelhandel Vorteile. Durch den Verarbeitungsrechner, der über den Datenkanal mit dem Vermittlungssystem verbunden ist können die verschiedensten Dienstleistungen erbracht werden. Die Art und der gewünschte Umfang dieser Dienste wird durch die über die jeweilige Endeinrichtung erfolgende Informationseingabe dem System mitgeteilt und von diesem über den an die entsprechende Schnittstelle angeschlossenen Datenkanal dem Verarbeitungsrechner übermittelt. Dort erfolgt dann aufgrund der den einzelnen Diensten zugeordneten Anwendungen bzw. Applikationen die weitere Verarbeitung.

An ein Vermittlungssystem sind eine Vielzahl von ihrer Art nach unterschiedlichen Endeinrichtungen anschließbar. Das Spektrum reicht vom einfachen analogen Telefon über das digitale Endgerät, multifunktionale Terminals, Personalcomputer bis hin zu Datenterminals. Die an den Endeinrichtungen vorhandenen Eingabeorgane sind neben einfachen Wählscheiben in aller Regel Tastaturen, die wiederum rein numerisch oder alphanumerisch aufgeteilt sein können. In Abhängigkeit davon unterscheiden sie sich also nicht nur im gebotenen Bedienungskomfort und im Zeichenvorrat sondern auch in der übertragungstechnischen Darstellung der Zeichenelemente. Im sogenannten Telefondatendienst, über den z.B. in Verbindung mit dem angeschlossenen Verarbeitungsrechner Material- oder Aktenbestellungen abgewickelt werden können werden bei rein numerisch aufgeteilten Eingabeorganen Buchstaben, die in Bestellbezeichnungen enthalten sind aufgrund einer festgelegten Codierung als Zifferninformationen eingegeben. Diese werden dann je nach Wahlverfahren im Rahmen der für einen solchen Datendienst notwendigen Gesamtinformation als Zifferninformation über den Datenkanal weitergeleitet. In einem solchen Fall werden dann durch die im Verarbeitungsrechner für die einzelnen Dienste implementierten Anwendungen durch spezielle Programme die übertragenen Ziffern gemäß der Stellung innerhalb der jeweiligen Gesamtinformation in eine Buchstabeninformation umgesetzt.

Die Europäische Patentanmeldung mit der Veröffentlichungsnummer EP-A-0 187 945 zeigt ein Verfahren zur Zeichenübertragung zwischen einer Datenverarbeitungsanlange und einer Fernsprechvermittlungsanlage, insbesondere einer Fernsprech-Nebenstelleanlage.

Es ist die Aufgabe der Erfindung im Hinblick auf die unterschiedlichsten Arten von Endgeräten zu vermeiden, daß eine Vielzahl derartiger spezieller Umsetzprogramme vorgeleistet werden müssen. Dies wird dadurch erreicht, daß zur Übermittlung eines jeden der genannten Aufträge über den Datenkanal ein einheitliches Datenformat festgelegt ist und daß die abhängig von der Art einer Endeinrichtung sich unterscheidende Darstellung der eingegebenen Zeichenelemente aufgrund einer entsprechenden Konvertierung sendeseitig jeweils vor Weitergabe über die Schnittstelle der jeweilige Auftragsinhalt auf das festgelegte Nutzdatenformat vereinheitlicht wird.

Durch die zentral im jeweiligen Vermittlungssystem erfolgende Umsetzung werden die übertragenen Datensatzformate unabhängig von der Art der jeweiligen Endeinrichtung, sodaß ein spezielles Programm für die einzelnen Aufträge eines bestimmten Dienstes entfallen kann. Dadurch werden auch weniger Verarbeitungsschritte erforderlich da die einzelnen Zeichenelemente unmittelbar nach ihrer Eingabe konvertiert werden und somit die Stellung dieser Zeichenelemente innerhalb der Gesamtinformation nicht ausgewertet werden muß. Weiterhin ist ein höherer Informationsfluß bei gleicher Datenübertragungsrate möglich und es können gleichzeitig mehr Applikationen über den Datenkanal bedient werden. Durch das übermittelte einheitliche Datensatzformat wird eine Kompatibilität bezüglich der unterschiedlichen Endeinrichtungen und der Vermittlungssysteme erreicht. Ein Austausch von Endeinrichtungen ist problemlos möglich. Der Zugriff zu dem Datenkanal kann durch eine mit einheitlichen physikalischen und prozeduralen Eigenschaften ausgestattete Schnittstelle erfolgen.

Gemäß einer Weiterbildung der Erfindung wird bei einer unmittelbaren Verbindung des Vermittlungssystems mit dem Verarbeitungsrechner die Konvertierung anhand einer der Steuerrechnereinheit zugeordneten zentral vorgesehenen Konvertierungstabelle vorgenommen. In dieser ist die unabhängig von der möglchen Darstellungsart eines eingegebenen Zeichenelementes festgelegte Übertragungsart abgespeichert. Es wird das damit bestimmte Nutzdatenformat für die dadurch hinsichtlich ihrer Darstellung verheitlichte Information mittels der Steuerrechnereinheit nach Hinzufügung der notwendigen Steuerzeichen über die Schnittstelle dem Datenkanal zugeführt. Es wird also in einfacher Weise durch ein zentral vorgesehenes Konvertierungsprogramm die abgespeicherte Tabelle bearbeitet und die Umsetzung in jeweils das gleiche Nutzdatenformat vorgenommen.

Gemäß einer Weiterbildung der Erfindung erfolgt die Konvertierung durch eine mit der Steuerrechnereinheit des Vermittlungssystems im Zeichenaustausch stehende Einheit (Server). Dies erfolgt aufgrund entsprechend abgespeicherter Konvertierungstabellen in Verbindung mit der dieser Einheit zugehörigen Steuereinheit und es wird das so ermittelte einheitliche Nutzdatenformat einer Gesamtinformation den mit dieser Einheit verbundenen Datenkanal zugeführt.

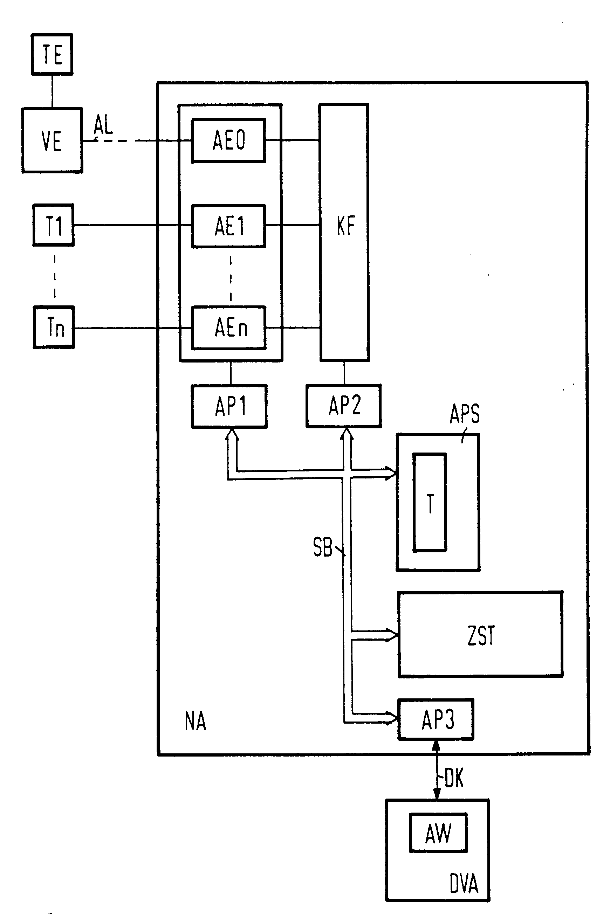

Im folgenden wird ein Ausführungsbeispiel der Erfindung anhand der Zeichnung näher erläutert. Die Zeichnung zeigt die hierfür notwendigen Systemkomponenten eines digitalen Vermittlungssystems, das z.B. ein Fernsprechnebenstellensystem darstellt. Eine zentrale Steuereinrichtung ZST steuert im wesentlichen die für die einzelnen Betriebsmöglichkeiten dieser Anlage erforderlichen Abläufe. Dabei greift sie auf den Inhalt eines ihr zugeordneten Arbeits-und Programmspeichers APS zurück. Die zentrale Steuereinrichtung ist über den Systembus SB mit diesem Speicher APS und den Schnittstellenanpassungseinrichtungen AP verbunden. Über eine mit dem Koppelfeld KF verbundene Anpassungseinrichtung AP2 erfolgen die zeitgerechten Einstellungen bzw. Steuerungen des Koppelfeldes KF. Das digitale Koppelfeld KF ist funktionsmäßig ein rechnergesteuerter Speicherbereich, in dem die digitalen Sprachsignale eingespeichert und zum jeweiligen Verbindungspartner ausgelesen werden. Über ein Amtsleitungsbündel bzw. über eine Amtsleitung AL ist das Nebenstellenvermittlungssystem NA mit einer externen Anlage, beispielsweise mit einer Vermittlungsanlage VE des öffentlichen Netzes verbunden. Stellvertretend für die daran angeschlossenen Endeinrichtungen ist die Teilnehmerendeinrichtung TE dargestellt. Der weiterführenden Leitung AL ist eine Anschlußeinheit AE0 zugeordnet, die mit dem Koppelfeld KF verbunden ist. Die Teilnehmerendeinrichtungen T1 bis Tn des Nebenstellenvermittlungssystems NA sind über die Anschlußeinheiten AE1 bis AEn gleichfalls mit dem digitalen Koppelfeld KF verbunden. In der Anschlußeinheit findet in Abhängigkeit von der Art der jeweiligen Endeinrichtung eine Anpassung der physikalischen Eigenschaft der Teilnehmerschnittstellen an die Schnittstellen des Koppelfeldes KF statt. Gleichzeitig erfolgt eine Bearbeitung der mit den Endeinrichtungen abzuwickelnden Signalisierungen. Es kann beispielsweise eine Vorverarbeitung der von den vorhandenen Indikationsstellen gelieferten Informationen durchgeführt werden. Die Schnittstelle zwischen den Anschlußeinheiten und dem Koppelfeld KF ist mehradrig, wobei sie im digitalen System für digitale Sprachsignale und für Steuersignale durchgänig ist. Die Anschlußeinheiten AE sind über eine Schnittstellenanpassung AP1 mit dem Systembus SB verbunden, um mit Hilfe der zentralen Steuereinrichtung ZST eine vollständige Signalisierungsbearbeitung durchführen zu können. Die an das Vermittlungssystem NA angeschlossenen Endeinrichtungen T1 bis Tn können hinsichtlich der Ausgestaltung ihrer für die Informationseingabe vorhandenen Eingabeorgane und damit hinsichtlich ihres Bedienungskomforts und hinsichtlich ihrer übertragungstechnischen Darstellung der einzelnen Zeichenelemente sehr unterschiedlich sein. Das Spektrum kann von analogen und digitalen Telefonen über multifunktionale Terminals bis zu Arbeitsplatzsystemen und Personalcomputer reichen. Diese teilnehmerseitigen Endeinrichtungen können mit rein numerischen oder mit sogenannten alphanumerischen Eingabeorgane ausgerüstet sein. Im Allgemeinen werden diese Eingabeorgane in entsprechend aufgeteilten Tastaturen bestehen. Zur alphanumerischen Eingabe wird ein Tastenfeld verwendet werden, das neben den numerischen Zeichenelementen 0 bis 9 und den bekannten Sondertasten zusätzliche Zeichenelemente, die z.B. mindestens den Buchstaben A biz Z des Alphabets entsprechen, aufweisen soll.

Das Fernsprechnebenstellensystem NA ist über einen Datenkanal DK über eine Schnittstelle AP3, die die notwendigen prozeduralen und physikalischen Eigenschaften aufweist mit einer Verarbeitungsrechnereinheit DVA verbunden. Diese Einheit kann beispielsweise durch ein Mikrorechnersystem oder durch eine große Datenverarbeitungsanlage die für bestimmte im Rahmen eines Fernsprechvermittlungssystems zu erbringende Dienstleistungen zusätzlich mit herangezogen wird, realisiert sein. Für die aufgrund dieser Zusammenarbeit eingerichteten verschiedene Datendienste kann die Einheit DVA aus zentralen Einrichtungen des Vermittlungssystems NA Daten übernehmen und bestimmte Kommandos übergeben. Beispiele für die Kooperation eines Vermittlungssystems und einer solchen Datenverarbeitungsanlage sind die Gebührendatenermittlung und-Verarbeitung, die Fernwartung, die Berechtigungsumschaltung, der automatisch gesteuerte Verbindungsaufbau zwischen internen oder zwischen internen und externen Endeinrichtungen und der sogenannte Telefon-Datendienst. Die Inanspruchnahme solcher Dienste wird im Allgemeinen durch die Betätigung einer Programmtaste und/oder Kennzahlwahl eingeleitet und beendet. Sie werden durch die für die einzelnen Dienste in der Einheit DVA vorhandenen Anwenderprogramme bzw. Applikationen realisiert. Das Vorhandensein der einzelnen Diensten zuzuordnenden Programmkomponenten der Einheit DVA wird durch die Einheit AW angedeutet. Für die Inanspruchnahme einer bestimmten Anwendung bzw. Applikation sind im Vermittlungssystem bestimmte Grunddaten abgespeichert. Jede Endeinrichtung T1 bis Tn ist hinsichtlich ihrer Art identifizierbar. Es wird also u.a. erkannt, ob es sich um eine analoge oder um eine digitale Endeinrichtung mit alphanumerisch oder rein numerisch aufgeteilten Eingabeorgan handelt. Außerdem ist die Berechtigung für die Inanspruchnahme eines Dienstes festgelegt, sodaß über eine entsprechende Bewertung der diezbezüglich eingegebenen Kenninformationen die Freigabe oder die Sperrung erfolgen kann. Dies geschieht in bekannter Weise aufgrund von entsprechend abgelegten Wahlbewertungstabellen.

Es ist nun sichergestellt, daß unabhängig von der Art der jeweiligen Endeinrichtung und von der Ausführungsform ihres jeweiligen Eingabeorgans die zu dem Verarbeitungsrechner DVA übermittelten Informationen ein einheitliches Datenformat aufweisen. Dadurch kann verhindert werden, daß in den Anwendungen der Einheit DVA eine Vielzahl von speziellen Auswerteprogrammen mit denen beispielsweise die Interpretation von Zeichenelementen innerhalb einer Gesamtinformation als Buchstabe oder als Ziffer möglich ist, erforderlich sind. Diese einheitliche Darstellung der zu übermittelnden Informationen kann beispielsweise im EBCDI-Format erfolgen, das für viele Verarbeitungsrechner als Verarbeitungscode in Frage kommt.

Der Telefondatendienst ist ein Beispiel für die im Rahmen der Zusammenarbeit zwischen einem Vermittlungssystem und einer Verarbeitungsrechnereinheit DVA möglichen Dienste. Über einen solchen Datenservice, der eine einfache Dateneingabe geringer Datenmenge über den Datenkanal DK zu einer Verarbeitungsrechnereinheit ermöglicht können beispielsweise Akten- oder Materialbestellungen erfolgen. Die Nutzdateninformation kann beispielsweise eine Abrechnungsnummer, einen Hinweise auf die bestellende Person und die eigentliche Bestellbezeichnung enthalten. Letztere wird im Allgemeinen aus entsprechenden Listen entnommen werden und kann sich aus einer vorgegebenen Folge von Ziffern und/oder Buchstaben zusammensetzen. Bei einer alphanumerisch aufgeteilten Tastatur der für die betreffende Eingabe verwendeten Endeinrichtung kann durch die Betätigung der entsprechenden Tasten eine aus solchen gemischten Zeichenelementen bestehende Information unmittelbar eingegeben werden. Bei Endeinrichtungen mit rein numerisch aufgeteilten Eingabeorganen werden die Buchstaben entsprechend einem vorgegebenen Code als Ziffer bzw. Ziffernkombinationen eingegeben. Dieser Code kann beispielsweise dem bei der sogenannten Computerauskunft der Postverwaltung verwendeten Code entsprechen. Unabhängig von jeweiligen Endeinrichtungstyp wird für die zu ermittelnden Informationen eine bestimmte gleiche Struktur vorgegeben. Dieses einheitliche Nutzdatenformat könnte beispielsweise demjenigen entsprechen, das von einer modernen digitalen Endeinrichtung mit alphanumerischer Tastatur geliefert wird. Die von analogen und digitalen Endeinrichtungen mit rein numerischer Tastatur gelieferten Informationen werden in dieses Datenformat umgesetzt. Das bedeutet, daß durch Ziffernkombinationen dargestellte Buchstaben in einer dem Buchstaben bei einer alphanumerischen Tastatur entsprechenden Form erzeugt werden. Diese notwendige Umsetzung kann dadurch erfolgen, daß ein entsprechendes Konvertierungsprogramm aufgrund der Bearbeitung einer entsprechenden Tablelle T diese Umsetzung bewirkt.

Es ist auch denkbar diese vorgesehene Umsetzung nicht an zentraler Stelle im Vermittlungssystem vorzunehmen, sondern diese Umsetzung in einem dem System zugeordneten sogenannten Server zu bewirken. Ein solcher Server stellt eine modulare Einheit dar, die mittels eines entsprechenden Rechnersystems ihnen jeweils zugeteilte spezielle Aufgaben erfüllen. Über einen Datenkanal wird in gleicher Weise die Verbindung des Servers zu der Verarbeitungsrechnereinheit DVA hergestellt.

## Patentansprüche

1. Verfahren für ein mit einem Verarbeitungsrechner verbundenes rechnergesteuertes Vermittlungssystem (NA), insbesondere Fernsprechnebenstellensystem, das wahlweise unmittelbar oder mittelbar über eine hierfür eingerichtete Schnittstelle (AP3) und einem darüber anschaltbaren zentralen Datenkanal (DK) mit einem ihm zugeordneten Verarbeitungsrechner (DVA) zur Aufnahme und/oder Abwicklung von Aufträgen für damit abzurufende unterschiedliche Dienstleistungen verbunden ist, wobei die für die Eingabe der Aufträge an das System verwendeten Eingabeorgane der daran angeschlossenen Endeinrichtungen (T1,...,Tn) je nach vorgesehenen Typ sich hinsichtlich ihres Zeichenvorrates und ihrer übertragungstechnischen Darstellung der Zeichenelemente unterscheiden,
**dadurch gekennzeichnet,** daß zur Übermittlung eines jeden der genannten Aufträge über den Datenkanal (DK) ein einheitliches Datenformat festgelegt ist und daß die abhängig von der Art einer Endeinrichtung sich unterscheidende Darstellung der eingegebenen Zeichenelemente aufgrund einer entsprechenden Konvertierung sendeseitig vor Weitergabe über die Schnittstelle der jeweilige Auftragsinhalt auf das festgelegte Nutzdatenformat vereinheitlicht wird.

2. Verfahren nach Anspruch 1,
**dadurch gekennzeichnet,** daß bei einer unmittelbaren Verbindung des Vermittlungssystems (NA) mit dem Verarbeitungsrechner (DVA) die Konvertierung anhand einer der Steuerrechnereinheit (ZST) zugeordneten zentral vorgesehenen Konvertierungstabelle (T) erfolgt, in der das unabhängig von der möglichen Darstellungsart eines eingegebenen Zeichenelementes festgelegte Nutzdatenformat abgespeichert ist und die so hinsichtlich ihrer Darstellung vereinheitlichte Information vermittels der Steuerrechnereinheit nach Hinzufügung der notwendigen Steuerzeichen dem Datenkanal (DK) zugeführt wird.

3. Verfahren nach Anspruch 1,
**dadurch gekennzeichnet,** daß die Konvertierung durch eine mit der Steuerrechnereinheit (ZST) des Systems (NA) im Zeichenaustausch stehende Einheit (Server) vorgenommen wird, daß dies aufgrund von entsprechend abgespeicherten Konvertierungstabellen in Verbindung mit der dieser Einheit zugehörigen Steuereinheit erfolgt und daß das so ermittelte einheitliche Nutzdatenformat für die jeweilige Information den mit ihr verbundenen Datenkanal zugeführt wird.

## Claims

1. Method for a computer-controlled exchange (NA), preferably telephone private branch exchange, connected to a host computer, which is connected optionally directly or indirectly via an interface (AP3) provided for this purpose and a central data channel (DK) that can be connected via the latter to a host computer (DVA) assigned thereto for receiving and/or processing tasks for different services to be called up therewith, in which the input means of the terminals (T1,...,Tn) connected thereto and used for entering the tasks for the system differ with respect to their character set and their technical transmission representation of the character elements depending on the type provided, characterised in that a uniform data format is defined for transmitting each of the aforesaid tasks over the data channel (DK), and in that the representation of the input character elements which differs depending on the type of a terminal is standardised to the defined useful data format on the basis of a corresponding conversion of the respective task contents at the transmitting end before forwarding via the interface.

2. Method according to Claim 1, characterised in that, given a direct connection of the exchange (NA) to the host computer (DVA), the conversion is carried out using a centrally provided conversion table (T) assigned to the control computer unit (ZST), in which table the useful data format defined independently of the possible representation mode of an input character element is stored, and the information thus standardised with respect to its representation is supplied to the data channel (DK) by means of the control computer unit after addition of the necessary control characters.

3. Method according to Claim 1, characterised in that the conversion is performed by a unit (server) with a character exchange connection to the control computer unit (ZST) of the system (NA), in that this is carried out on the basis of correspondingly stored conversion tables in connection with the control unit associated with said unit, and in that the uniform data format for the respective information determined in this way is supplied to the data channel connected thereto.

## Revendications

1. Procédé pour un système de commutation (NA) assisté par ordinateur et qui est relié à un ordinateur de traitement, en particulier pour un système à central téléphonique privé, qui est relié au choix directement ou indirectement, par l'intermédiaire d'une interface (AP3) agencée à cet effet, et d'un canal central de données (DK) susceptible d'être connecté, par l'intermédiaire de cette dernière, à un ordinateur de traitement (DVA) qui lui est associé, pour la réception et/ou l'exécution d'ordres pour diverses prestations demandées, du type dans lequel les organes d'entrée des dispositifs terminaux (T1, ..., Tn) qui y sont reliés et qui sont utilisés pour l'entrée des instructions dans le système, se distinguent, selon le type prévu, du point de vue de leur réserve en caractères et de leur représentation en technique de transmission, des caractères élémentaires,
caractérisé en ce que, pour transmettre chacun desdits ordres par le canal de données (DK), un format homogène de données est fixé, et en ce que la représentation des caractères élémentaires inscrits, qui se diffèrencie en fonction du type d'un dispositif terminal, est uniformisée au format de données utiles fixé, par suite d'une conversion correspondante côté émission, avant retransmission, par l'intermédiaire de l'interface, du contenu de l'ordre concerné.

2. Procédé selon la revendication 1,
caractérisé en ce que, dans le cas d'une liaison directe du système de commutation (NA) à l'ordinateur de traitement (DVA), la conversion est faite à l'aide d'un tableau de conversion (T) central, associé à une unité formant ordinateur de commande (ZST), tableau dans lequel le format de données utiles fixé est mémorisé indépendamment du mode de visualisation possible des caractères élémentaires inscrits, l'information ainsi uniformisée en ce qui concerne sa représentation, étant envoyée au canal de données (DK) au moyen de l'unité formant ordinateur de commande, après adjonction des caractères de commande qui sont nécessaires.

3. Procédé selon la revendication 1,
caractérisé en ce que la conversion est opérée par l'intermédiaire d'une unité (serveur) capable d'échanger des caractères avec l'unité formant ordinataur de commande (ZST) du système (NA), en ce que cette conversion a lieu, sur la base de tableaux de conversion mémorisés de façon correspondants, en liaison avec l'unité de commande qui est associée au "serveur", et en ce qu'on envoie le format de données utiles et uniforme ainsi détecté pour chaque information, au canal de données qui lui est relié.
